# EUROPÄISCHE PATENTSCHRIFT

(11) **EP 1 103 753 B1**
(45) Veröffentlichungstag und Bekanntmachung des Hinweises auf die Patenterteilung: **30.07.2003**
(21) Anmeldenummer: 00120999.8
(22) Anmeldetag: 27.09.2000
(51) Int. Cl.: F16L 55/46

(54) **Molchbares Dreiwegeventil**
Pigable three-way valve
Vanne à trois voies nettoyable par un racleur

(30) Priorität: 29.11.1999 DE 29920941 U
(43) Veröffentlichungstag der Anmeldung: 30.05.2001
(73) Patentinhaber: Skibowski, Martin, 22145 Hamburg (DE); Jakubik, Michael, 22145 Hamburg (DE)
(72) Erfinder: Skibowski, Martin, 22147 Hamburg (DE); Jakubik, Michael, 22149 Hamburg (DE)
(74) Vertreter: Patentanwälte Hauck, Graalfs, Wehnert, Döring, Siemons, Schildberg

(56) Entgegenhaltungen:
- DE-A- 1 600 762
- DE-A- 3 246 622
- US-A- 3 220 432

## Beschreibung

Die Erfindung bezieht sich auf ein molchbares Dreiwegeventil nach dem Anspruch 1.

Ein häufig vorkommender Fall bei der Verteilung von Medien ist der, bei dem von einer Förderleitung eine Reihe von Leitungen abzweigt, wenn beispielsweise ein Reservoir mit einer Vielzahl von Anschlüssen verbunden werden soll. Um jeweils einen Anschluss oder eine Abzweigung mit der Leitung zu verbinden, ist daher an jeder Verzweigungsstelle ein Dreiwegeventil oder eine Dreiwegearmatur anzuordnen. In einer Betriebsstellung ist die Dreiwegearmatur auf Durchgang geschaltet, während die Abzweigung gesperrt ist. In einer zweiten Betriebsstellung wird eine der beiden Anschlüsse für die Leitung mit der Abzweigung verbunden.

Es wird mehr und mehr dazu übergegangen, derartige Leitungen reinigungsfähig auszuführen, d.h. sie molchbar zu machen siehe , zum ßeispiel, DE-A-32 46 622 . Es ist auch bekannt, die oben erwähnten Dreiwegearmaturen molchbar zu gestalten, indem sie mit einem molchbaren Durchgang versehen sind. Es ist jedoch nicht möglich, die bekannten Systeme ohne weiteres derart zu molchen, dass Medium über eine Abzweigung mit Hilfe eines einzigen Molches abgefördert werden kann. Vielmehr ist bekannt, mit einem sogenannten Zweimolchesystem zu arbeiten und zwischen benachbarten Absperrarmaturen einen T-Schieber anzuordnen, der mit einer Molchfangeinrichtung versehen ist. Es ist auch bekannt, die Schieber und Absperrarmatur zu kombinieren und mit einer Molchfangeinrichtung zu versehen. Der Erfindung liegt die Aufgabe zugrunde, ein Dreiwegeventil zu schaffen, bei dem mit einem Ein-Molchsystem gefahren werden kann und das einen relativ geringen baulichen Aufwand aufweist.

Diese Aufgabe wird durch die Merkmale des Anspruchs 1 gelöst.

Bei dem erfindungsgemäßen Dreiwegeventil ist der molchbare Durchgang des Ventilglieds von einem Raum umgeben, der zwei Öffnungen nach außen aufweist. Eine erste Öffnung befindet sich in der gleichen Ebene wie die beiden Anschlussstutzen, wobei sie jedoch gegenüber den Anschlussstutzen um etwa 90° versetzt liegt. Mithin kann diese Öffnung in einer Drehstellung mit einem Anschlussstutzen ausgerichtet sein, wobei dann der gerade Durchgang gesperrt ist. Eine zweite Öffnung ist ständig mit dem dritten Anschlussstutzen ausgerichtet. Der ersten Öffnung ist eine Molchfangeinrichtung zugeordnet. In der einen Betriebsstellung, in der das Dreiwegeventil zur Abzweigung hin geöffnet ist, kann daher mit Hilfe eines einzigen Molchs eine Molchung erfolgen. Ist das Medium über die Abzweigleitung geleert, wird das Dreiwegeventil umgeschaltet und nunmehr kann der Molch den Durchgang reinigen und mit Hilfe eines von entgegengesetzter Richtung strömenden Treibmittels in eine Grundposition zurückgebracht werden.

Man erkennt, dass bei der Erfindung jeweils nur ein einziges Dreiwegeventil pro Abzweigung erforderlich ist. Gegenüber herkömmlichen Dreiwegeventilen, die z.B. mit einem Küken arbeiten, besteht ein Unterschied im Hinblick auf das Ventilglied insofern, als es bei der Erfindung einen rohrartigen Durchgang benötigt wird, der von einem Raum umgeben ist, der ständig mit dem dritten Anschlussstutzen verbunden ist und der je nach Drehstellung des Ventilglieds mit einem der Anschlussstutzen verbunden werden kann.

Nach einer Ausgestaltung der Erfindung sind die Öffnungen im Ventilglied so ausgebildet bzw. angeordnet, dass das Ventil ohne Überschneidungen arbeitet.

In einer anderen Ausgestaltung der Erfindung ist vorgesehen, dass das Ventilglied zylinderförmig ist und die zweite Öffnung in einer Bodenfläche des Zylinders befindet. Eine besonders konstruktive vorteilhafte Ausgestaltung besteht darin, dass das Gehäuse topfförmig und einteilig mit dem Anschlussstutzen geformt ist und die offene Seite des Gehäuses von einem scheibenförmigen Deckel dichtend verschließbar ist. Das Ventilglied kann ebenfalls einteilig geformt sein und auch einteilig mit einem Lagerzapfen, der durch eine Lageröffnung im Gehäuse bzw. im Deckel dichtend geführt ist.

Die erfindungsgemäße Dreiwegearmatur kann man auch als Molcheinsetzund Entnahmestation verwenden, wenn nach einer weiteren Ausgestaltung der Erfindung ein vierter Anschlussstutzen vorgesehen ist, der um annähernd 90° zum ersten und zweiten Anschlussstutzen versetzt angeordnet ist und zu dem der Durchgang des Ventilgliedes bei geschlossenem dritten Anschlussstutzen ausgerichtet ist. Einer der ersten beiden Anschlussstutzen weist einen Fangeinsatz auf und im Gehäuse ist auf der dem vierten Anschlussstutzen gegenüberliegenden Seite ein Anschluss für Druckgaszufuhr vorgesehen. Bei dieser Ausgestaltung kann ein Molch in den Durchgang des Ventilglieds gefahren werden, wobei er durch den Fangeinsatz in der Armatur abgebremst wird. Durch 90°-Drehung des Ventilgliedes kann der Durchgang zum vierten Anschlussstutzen ausgerichtet werden, so dass der Molch mit Druck aus der Armatur herausgefahren werden kann. In dieser Position des Ventilglieds ist sowohl die Molchleitung als auch die abgehende Leitung (dritter Anschlussstutzen) abgesperrt.

Ein Ausführungsbeispiel der Erfindung wird nachfolgend anhand von Zeichnungen näher erläutert.
- Fig. 1: zeigt im Schnitt eine Dreiwegearmatur nach der Erfindung.
- Fig. 2: zeigt einen Schnitt durch die Armatur nach Fig. 1 entlang der Linie 2-2.
- Fig. 3: zeigt die Dreiwegearmatur nach Fig. 1 in geöffneter Stellung.
- Fig. 4: zeigt einen Schnitt durch die Armatur nach Fig. 3 entlang der Linie 4-4.
- Fig. 5: zeigt den Einsatz der erfindungsgemäßen Armatur während des Molchbetriebs.
- Fig. 6: zeigt einen Schnitt durch eine weitere Ausführungsform einer Dreiwegearmatur nach der Erfindung.
- Fig. 7: zeigt die Dreiwegearmatur nach Fig. 6 in einer anderen Position des Ventilgliedes.

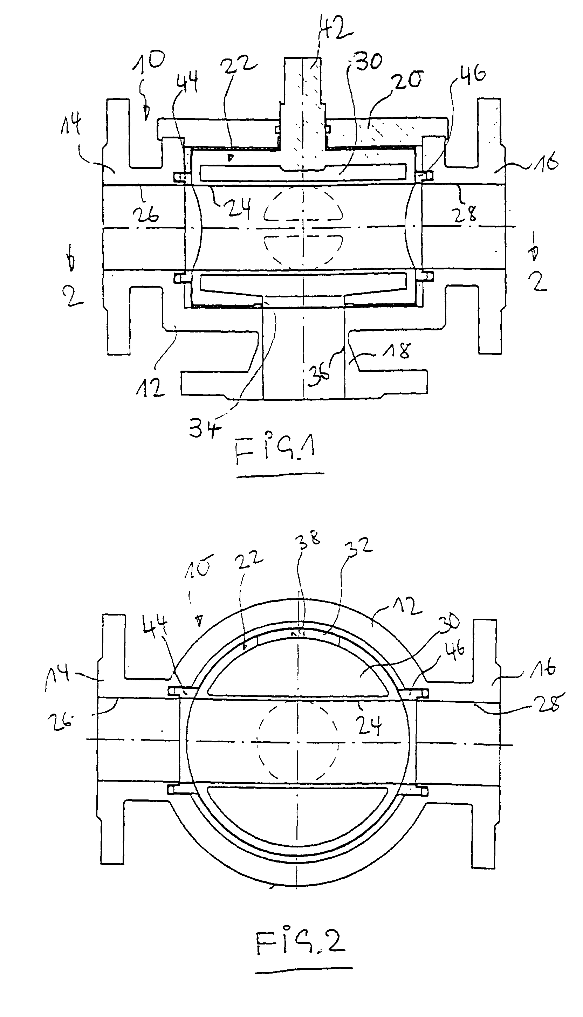

Das in den Figuren 1 bis 4 dargestellte Dreiwegeventil weist ein Gehäuse 10 auf, das aus einem topfförmigen Abschnitt 12 mit einteilig daran angeformten Anschlussstutzen 14, 16, 18 besteht. Die oben offene Seite des Gehäuses 10 wird durch einen scheibenförmigen Deckel 20 abgeschlossen.

Das Gehäuse 10 weist innen einen zylindrischen Hohlraum auf, in dem ein Ventilglied 22 aufgenommen ist. Die Außenkontur des Ventilglieds 12 ist entsprechend dem Hohlraum des Gehäuses 10 zylindrisch. Diametral durch das Ventilglied 22 erstreckt sich ein zylindrischer Durchgang 24, dessen Durchmesser dem Durchmesser der Durchbohrungen 26, 28 der Anschlussstutzen 14, 16 entspricht. In der in Fig. 1 geschlossenen Stellung des Dreiwegeventils ist der Durchgang 24 zu den Bohrungen 26, 28 ausgerichtet. Mithin ist eine durchgehend freie Förderleitung geschaffen, durch welche ein Molch geschickt werden kann.

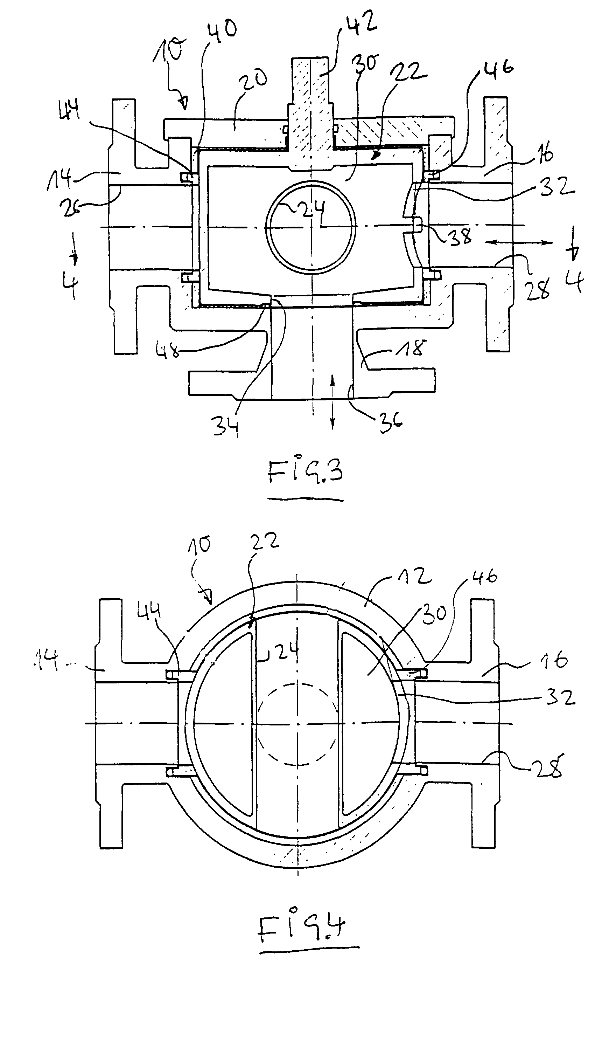

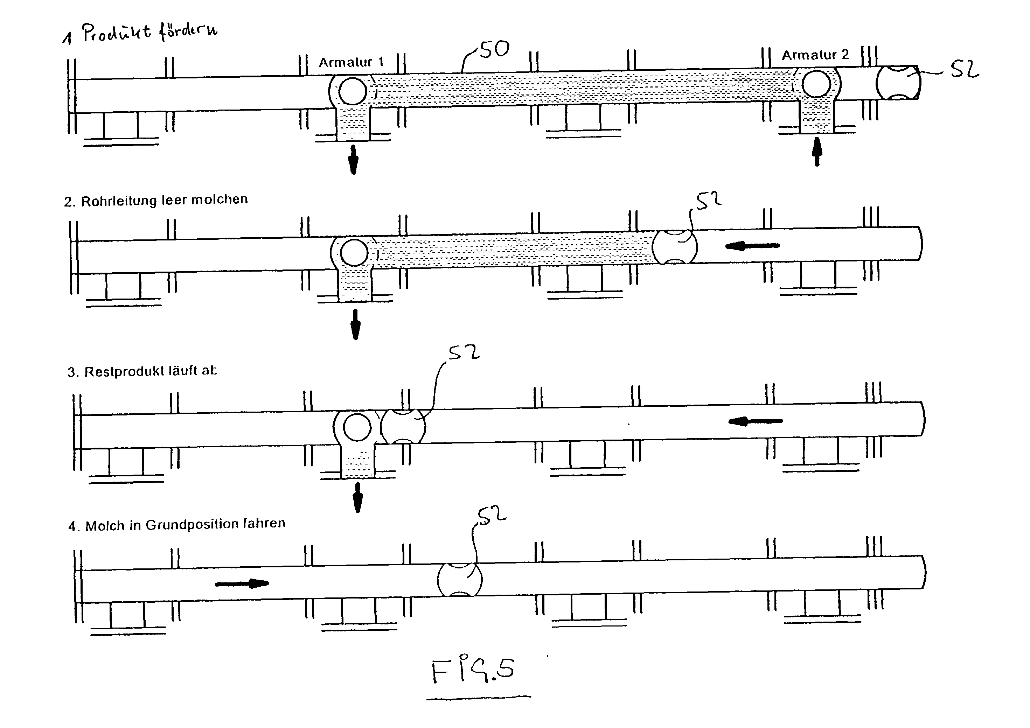

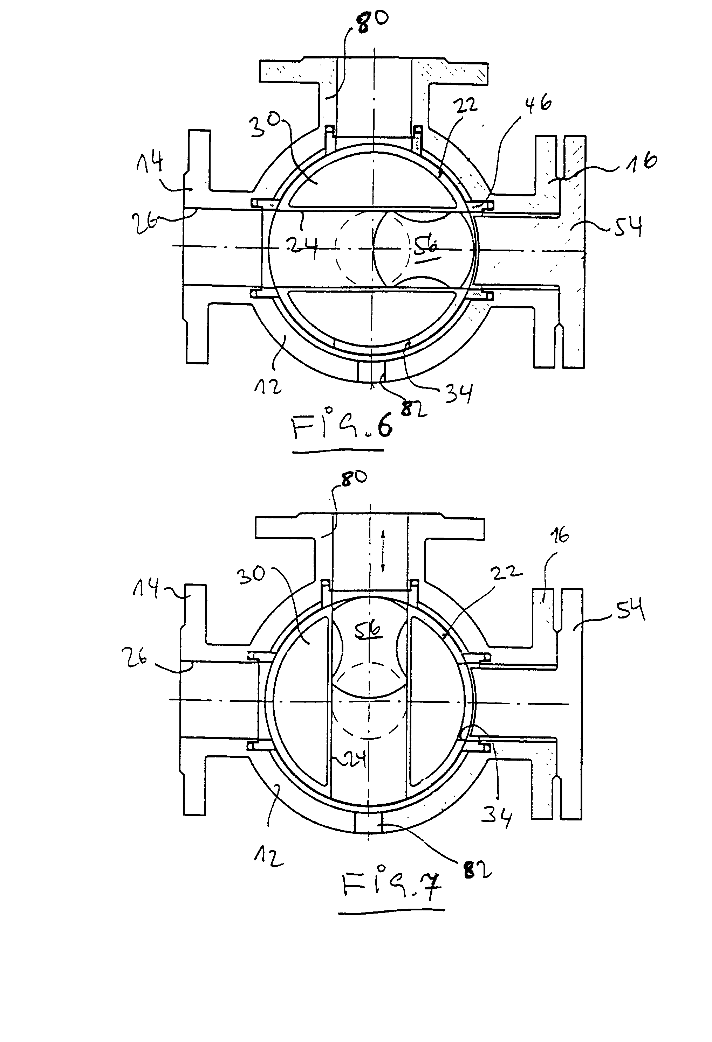

Der von einem relativ dünnwandigen Zylinder gebildete Durchgang 24 im Inneren des Ventilglieds 22 wird von einem Zwischenraum 30 umgeben, der in der einen Schnittebene gemäß Fig. 2 und 4 aus zwei sektorförmigen Abschnitten besteht und in der um 90° versetzten Schnittebene aus im Schnitt rechteckigen Abschnitten, welche um den Durchmesser des Durchgangs 24 reduziert sind. Der Raum 30 weist eine erste Öffnung 32 auf, welche in der geöffneten Stellung des Ventilglieds 22 mit der Bohrung 28 ausgerichtet ist. Man erkennt, dass die Öffnung 32 in der gleichen Ebene liegt wie die Bohrungen 26, 28 der Anschlussstutzen 14, 16. In der um 90° versetzten Stellung des Ventilglieds 22 gemäß Fig. 1 und 2 ist die Öffnung 32 abgesperrt.

Der Innenraum 30 ist über eine zweite Öffnung 34 mit der Bohrung 36 des dritten Anschlussstutzens 18 ständig ausgerichtet. Die erste Öffnung 32 wird diametral von einem Steg 38 überquert, der als Molchfänger dient.

Die Wandung des zylindrischen Hohlraums des Gehäuses 10 ist mit einer geeigneten Auskleidung 40 versehen, um Toträume zu vermeiden. Das Ventilglied 22 oder das Küken weist einen einteilig damit geformten Lagerzapfen 42 auf, der sich durch eine entsprechende Öffnung im Deckel 20 erstreckt zur Betätigung des Ventilglieds 22.

An der Innenseite des Anschlussstutzens 14 bzw. 16 ist jeweils eine Dichtungsanordnung 44 bzw. 46 eingelassen, die mit dem Außenumfang des Ventilglieds 22 dichtend zusammenwirkt. Ein weiterer Dichtring 48 ist in die Außenseite des Boden des zylindrischen Ventilglieds 22, die Öffnung 34 umgebend, eingelassen.

Wie aus den Figuren zu erkennen, ist in der Position des Ventilglieds 22 nach den Figuren 1 und 2 eine Verbindung zwischen den Bohrungen 26, 28 hergestellt. Bei der Stellung nach Fig. 3 und 4 ist hingegen die Bohrung 28 mit der Bohrung 36 verbunden.

In Fig. 5 ist eine Leitung 50 dargestellt, die mit zwei Armaturen, Armatur 1 und Armatur 2, der in den Figuren 1 bis 4 gezeigten Art ausgerüstet ist.

Anhand der vierfachen Darstellungen wird die Funktion der Armaturen im Hinblick auf das Molchen dargestellt.

In der obersten Darstellung Nr. 1 sind die Armaturen 1 und 2 in der geöffneten Position gemäß den Figuren 3 und 4, so dass Produkt von einer Zweigleitung zur anderen Zweigleitung, welche den Armaturen 1 und 2 zugeordnet sind, gemäß den Pfeilen strömen kann. In der Darstellung Nr. 2 ist die Armatur 2 offen, und ein Molch, der in der obersten Darstellung in der Grundstellung war, drückt das Medium über die zur Armatur 1 gehörende Zweigleitung heraus. Dies ist in der Darstellung Nr. 3 abgeschlossen. Der Molch 52 liegt an dem Steg 38 gemäß den Figuren 1 bis 3 an. In der Darstellung Nr. 4 wird auch die Armatur 1 geschlossen, so dass mit Hilfe eines geeigneten Treibmittels gemäß dem Pfeil der Molch 52 wieder in seine Grundstellung zurück bewegt werden kann.

Die Dreiwegearmatur nach Fig. 6 und 7 gleicht derjenigen nach den Figuren 1 bis 4, so dass gleiche Teile mit gleichen Bezugszeichen versehen sind. Sie unterscheidet sich jedoch von der vorstehend dargestellten Armatur dadurch, dass ein vierter Anschlussstutzen 80 vorgesehen ist, der in der gleichen Ebene liegt wie die ersten Anschlussstutzen 14, 16, jedoch zu diesen um 90° versetzt. Der dritte Anschlussstutzen ist in den Figuren 6 und 7 nur strichliert angedeutet. Im Gehäuse 12 auf der dem vierten Anschlussstutzen 80 gegenüberliegenden Seite ist ein Druckanschluss 82 vorgesehen.

Die in den Figuren 6 und 7 gezeigte Armatur dient als Molcheinsetz- und Entnahmevorrichtung. Zu diesem Zweck ist der Stutzen 16 durch einen Fangeinsatz 54 verschlossen. Ein durch die Molchleitung hindurchgeschickter Molch 56, der dementsprechend über den Anschlussstutzen 14 in die Armatur eintritt, wird durch den Fangeinsatz 54 gestoppt (Fig. 6). Wird nun das Ventilglied 22 um 90° verdreht, so dass der Durchgang 24 zum vierten Anschlussstutzen 80 ausgerichtet ist, kann mit Hilfe von z.B. Druckluft, die über die Öffnung 82 zugeführt wird, der Molch 56 entfernt werden. Umgekehrt kann ein Molch 56 auch in den Durchgang 24 eingeführt werden, um anschließend in eine Molchleitung getrieben zu werden.

## Patentansprüche

1. Molchbares Dreiwegeventil mit
- einem Gehäuse (10), das auf gegenüberliegenden Seiten Anschlussstutzen (14, 16) für jeweils eine Leitung aufweist sowie einen dritten Anschlussstutzen (18), der gegenüber den ersten beiden Anschlussstutzen (14, 16) jeweils um etwa 90° versetzt angeordnet ist
- einem im Gehäuse (10) um eine Achse drehbar gelagerten Ventilglied (22), das je nach Drehstellung wahlweise die beiden ersten Anschlussstutzen (14, 16) miteinander oder einen der beiden ersten Anschlussstutzen (14, 16) mit dem dritten Anschlussstutzen (18) verbindet, wobei
das Ventilglied (22) einen molchbaren Durchgang (24) für die Verbindung der beiden ersten Anschlussstutzen (14, 16) aufweist, ferner
einen den Durchgang (24) umgebenden Raum (30) mit
einer ersten Öffnung (32,), die in der Ebene der ersten beiden Anschlussstutzen (14, 16) um etwa 90° versetzt zu diesen liegt und einen Anschlag (38) für einen Molch (52) aufweist und
einer zweiten Öffnung (34), die ständig zum dritten Anschlussstutzen (18) ausgerichtet ist.

2. Dreiwegeventil nach Anspruch 1, **dadurch gekennzeichnet, dass** die Öffnungen im Ventilglied (22) so ausgebildet bzw. angeordnet sind, dass das Ventil ohne Überschneidungen arbeitet.

3. Ventil nach Anspruch 1 oder 2, **dadurch gekennzeichnet, dass** der Molchanschlag (38) von einem die erste Öffnung überquerenden Steg gebildet ist.

4. Ventil nach einem der Ansprüche 1 bis 3, **dadurch gekennzeichnet, dass** das Ventilglied (22) zylinderförmig ist und die zweite Öffnung (34) sich in einer Bodenfläche des Zylinders befindet.

5. Ventil nach Anspruch 4, **dadurch gekennzeichnet, dass** das Gehäuse (10) topfförmig und mit den Anschlussstutzen (14, 16, 18) einteilig geformt ist und die offene Seite des Gehäuses (10) von einem scheibenförmigen Deckel (20) verschließbar ist.

6. Ventil nach einem der Ansprüche 1 bis 5, **dadurch gekennzeichnet, dass** auf der Gehäuseinnenseite der ersten beiden Anschlussstutzen (14, 16) Dichtungsanordnungen eingelassen sind, die mit der Umfangsfläche des Ventilglieds (22) zusammenwirken.

7. Ventil nach einem der Ansprüche 1 bis 6, **dadurch gekennzeichnet, dass** die zweite Öffnung (34) an der Außenseite von einem Dichtring (48) umgeben ist.

8. Ventil nach einem der Ansprüche 4 bis 7, **dadurch gekennzeichnet, dass** das Ventilglied (22) einteilig mit einem Lagerzapfen (42) geformt ist, der dichtend durch eine Lageröffnung im Gehäuse (10) bzw. Deckel (20) geführt ist.

9. Ventil nach einem der Ansprüche 1 bis 8, **dadurch gekennzeichnet, dass** ein vierter Anschlussstutzen (80) vorgesehen ist, der um annähernd 90° zum ersten und zweiten Anschlussstutzen (14, 16) versetzt angeordnet ist und zu dem der Durchgang (24) des Ventilglieds (22) bei geschlossenem dritten Anschlussstutzen ausrichtbar ist, mit dem ersten oder zweiten Anschlussstutzen (16) ein Fangeinsatz (54) verbindbar ist und im Gehäuse auf der dem vierten Anschlussstutzen (80) gegenüberliegenden Seite ein Anschluss (82) für eine Druckgaszufuhr vorgesehen ist.

## Claims

1. Piggable three-way valve with
- a box (10), which is provided on opposing sides with connection pieces (14, 16) for one conduit each, respectively, as well as a third connection piece (18), which is disposed offset at about 90° with respect the first two connection pieces (14, 16), respectively
- a valve member (22), rotatably mounted around an axis in the box (10), which corresponding to its position of rotation at option connects the first two connection pieces (14, 16) with each other, or one of said first two connection pieces (14, 16) with the third connection piece (18), whereby
the valve member (22) is provided with a piggable passage (24) for the connection of the first two connection pieces (14, 16), and further with
a space (30) surrounding the passage (24) with
a first opening (32), which is located in the plane of the first two connection pieces (14, 16) at about 90° offset to them and is provided with a stop (38) for a pig (52), and
a second opening (34), which is permanently aligned towards the third connection piece (18).

2. Three-way valve according to claim 1, **characterised in that** the openings in the valve member (22) are formed and disposed, respectively, such that the valve works without intersections.

3. Valve according to claim 1 or 2, **characterised in that** the pig stop (38) is formed by a bridge traversing the first opening.

4. Valve according to one of claims 1 to 3, **characterised in that** the valve member (22) is cylinder-shaped and the second opening (34) is located in a bottom plane of the cylinder.

5. Valve according to claim 4, **characterised in that** the box (10) is pot-shaped and formed in one piece with the connection pieces (14, 16, 18), and the open side of the box (10) is lockable up by a disc-shaped cover (20).

6. Valve according to one of claims 1 to 5, **characterised in that** sealing arrangements are flush mounted on the box inside of the first two connection pieces (14, 16), which co-operate with the circumferential area of the valve member (22).

7. Valve according to one of claims 1 to 6, **characterised in that** the second opening (34) is surrounded by a conical sealing nipple (48) on the outside.

8. Valve according to one of claims 4 to 7, **characterised in that** the valve member (22) is formed in one piece with a bearing neck (42), which is sealingly guided through a bearing opening in the box (10) and the cover (20), respectively.

9. Valve according to one of claims 1 to 8, **characterised in that** a fourth connection piece (80) is provided, which is disposed at about 90° offset to the first and second connection piece (14, 16) and to which the passage (24) of the the valve member (22) is alignable when the third connection piece is closed, a catching insert (54) is connectable to the first or second connection piece (16), and a connection (82) for a compressed gas supply is provided in the box on the side opposing the fourth connection piece (80).

## Revendications

1. Vanne à trois voies raclable, comprenant
- un boîtier (10) présentant sur des côtés opposés des raccords (14, 16), chacun pour raccorder une conduite, ainsi qu'un troisième raccord (18) décalé de 90° environ par rapport aux deux premiers raccords (14, 16).
- un organe de vanne (22) logé dans le boîtier (10) de manière à pouvoir pivoter autour d'un axe et mettant en communication, selon sa position angulaire, les deux premiers raccords (14, 16) l'un avec l'autre, ou l'un des deux premiers raccords (14, 16) avec le troisième raccord (18),
l'organe de vanne (22) comportant un passage (24) raclable pour la communication des deux premiers raccords (14, 16), et en outre
un espace (30) entourant te passage (24), présentant
une première ouverture (32) située dans le plan des deux premiers raccords (14, 16) et décalée de 90° environ par rapport à ceux-ci et comportant une butée (38) pour un écouvillon (52), et
une seconde ouverture (34) toujours alignée par rapport au troisième raccord (18).

2. Vanne à trois voies selon la revendication 1, **caractérisée en ce que** les ouvertures de l'organe de vanne (22) sont formées ou disposées de sorte que la vanne fonctionna sans recoupements.

3. Vanne selon la revendication 1 ou 2, **caractérisée en ce que** la butée d'écouvillon (38) est formée par une barrette traversant la première ouverture.

4. Vanne selon l'une des revendications 1 à 3, **caractérisée en ce que** l'organe de vanne (22) est cylindrique, et que la seconde ouverture (34) se trouve dans une surface de fond du cylindre.

5. Vanne selon la revendication 4, **caractérisée en ce que** le boîtier (10) est sous forme de pot et est formé en une pièce avec les raccords (14, 16, 18), le côté ouvert du boîtier (10) pouvant être fermé par un couvercle en forme de disque (20).

6. Vanne selon l'une des revendications 1 à 5, **caractérisée en ce que** des dispositifs d'étanchéité sont encastrés sur la face interne du boîtier des deux premiers raccord (14, 16) et coopèrent avec la surface périphérique de l'organe de vanne (22).

7. Vanne selon l'une des revendications 1 à 6, **caractérisée en ce que** la seconde ouverture (34) est entourée à l'extérieur d'une bague d'étanchéité (48).

8. Vanne selon l'une des revendications 4 à 7, **caractérisée en ce que** l'organe de vanne (22) est formé d'une pièce avec un tourillon (42) traversant de façon étanche une ouverture de palier dans le boîtier (10) ou dans le couvercle (20).

9. Vanne selon l'une des revendications 1 à 8, **caractérisée en ce qu'**il est prévu un quatrième raccord (80) qui est décalé de 90° environ par rapport aux premier et deuxième raccords (14, 16) et avec lequel le passage (24) de l'organe de vanne (22) peut être aligné lorsque le troisième raccord est fermé, **en ce qu'**un insert d'arrêt (54) est raccordable avec le premier ou le deuxième raccord (16), et qu'un raccord (82) pour l'amenée d'un gaz pressurisé est prévu dans le boîtier sur le côté opposé au quatrième raccord (80).
